Europäisches Patentamt

European Patent Office

Office européen des brevets

(11) Publication number: **0 406 446 A1**

# (12) EUROPEAN PATENT APPLICATION
## published in accordance with Art. 158(3) EPC

(21) Application number: 90901668.5

(22) Date of filing: 08.01.90

(86) International application number:
PCT/JP90/00013

(87) International publication number:
WO 90/07972 (26.07.90 90/17)

(51) Int. Cl.⁵: **B01D 53/34**

(30) Priority: 10.01.89 JP 3245/89

(43) Date of publication of application:
09.01.91 Bulletin 91/02

(84) Designated Contracting States:
AT BE CH DE DK ES FR GB IT LI LU NL SE

(71) Applicant: **NICHIMEN CORPORATION**
**2-2, Nakanoshima 2-Chome, Kita-Ku**
**Osaka 530(JP)**

Applicant: **FUJI MACHINERY ENGINEERING**
**CO,LTD**
**1-5, Nishitenma 5-chome, Kita-ku, Osaka-shi**
**Osaka 530(JP)**

(72) Inventor: **NAKAGAWA, Kenichi**
**16-49, Shinasahigaoka**
**Ikoma-shi, Nara 630-02(JP)**

(74) Representative: **Darby, David Thomas et al**
**Abel & Imray Northumberland House 303-306**
**High Holbornorn**
**London WC1V 7LH(GB)**

(54) DESULFURIZATION OF EXHAUST GAS.

(57) This invention relates to a process for the desulfurization of exhaust gas by bringing an exhaust gas containing oxides of sulfur into continuous gas-liquid contact with a treating solution comprising a desulfurizing agent in a desulfurization tower to thereby absorb said oxides in said solution, wherein calcined magnesium oxide is used as the desulfurizing agent and an external treatment system consisting of first and second reaction stages and a solid-liquid separation stage are provided outside the desulfurization tower. The first reaction stage comprises mixing a desulfurization liquor supplied from the desulfurization tower with a slurry supplied from the solid-liquid separation stage to effect a reaction therebetween, while the second reaction stage comprises mixing the reaction product of the first reaction stage with the particles of calcined magnesium oxide to effect a reaction therebetween. The solid-liquid separation stage comprises separating the reaction product of the second reaction stage into a solution free from solid matter and a slurry to be fed to the first reaction stage, and supplying said solution free from solid matter to the desulfurization tower for use as the treating solution therein. The reaction in the first reaction stage can be promoted by finally dividing at least part of the slurry to be fed to said stage.

DESCRIPTION

DESULFURIZING METHOD OF EXHAUST GAS

TITLE MODIFIED
see front page

Technical Field

This invention relates to a desulfurizing method of exhaust gas which contains sulfuric oxides, for example exhaust gas produced by the combustion of heavy oil or coal, and more particularly to a desulfurizing method utilizing light burned magnesium oxide as a desulfurizing agent.

Background Art

In general, the desulfurization of exhaust gas is effected in a vertical desulfurizing tower in which an aqueous treatment consisting of aqueous solution or slurry of desulfurizing agent poured from above like a shower is continuously contacted with the exhaust gas introduced from below and thereby the sulfuric oxides contained in the exhaust gas are fixed as sulfates or sulfites. Normally, the aqueous treatment after being poured (hereinafter referred to as "desulfurization solution") is pumped up to circulate together with fresh aqueous treatment continuously supplied, while the excess amount of solution resulting from fresh supply is discharged.

Conventionally known as the desulfurizing agent is hydroxides such as sodium hydroxide, ammonium hydroxide, magnesium hydroxide and calcium hydroxide or basic oxides such as calcium oxide. Recently magnesium hydroxide has been often used among them, because the magnesium hydroxide is comparatively inexpensive and desulfurization products are easily soluble in water without yielding scale as in the case of calcium desulfurizing agent. Moreover it can be used in a form of aqueous solution in which magnesium hydroxide is dissolved when the PH of the aqueous treatment is adjusted to about 6.

Needless to say, it is desired that the desulfurization of exhaust gas is as low as possible in treatment cost, and desulfurizing agents less expensive than magnesium hydroxide have been constantly expected. At present, however, no effective alternatives have been found yet. For example, there have been provided ground light burned magnesium oxide (MgO), which can be obtained by calcining magnesium carbonate ($MgCO_3$) ores such as magnesite at a relatively low temperature (800 to 1000 $^\circ$C). They are less expensive than magnesium hydroxide and soft because they are calcined at a low temperature and do not yield clinker. Futher they are deemed to be basic oxide of high activity (i.e. easily hydrated into hydroxide). Nevertheless, they have been scarcely used as the desulfurizing agent. Following reasons can be construed.

First, magnesium oxide takes hydration to yield hydroxide prior to desulfurization and besides said hydration process proceeds considerably slowly compared with the hydration of calcium oxide (CaO) which is also one of basic oxides. Accordingly desulfurization efficiency is inferior.

Second, the above-mentioned light burned magnesium oxide is obtained by calcining various size of granulated

- 2 -

ores and ground into particle. Therefore, even though being light burned, the ore surface which contacts with hot gas yields less-reactive portions like hard clinker because of excess burning. On the contrary, the core portion of large pieces of ore remains uncalcined magnesium carbonate.

Furthermore, there are impurities such as $SiO_2$ and $Al_2O_3$ in the ore pieces. As a result, there are obtained uneven particles which consist of the mixture of magnesium oxide of indefinit reactivity and other constituents.

Therefore, if a slurry of ground light burned magnesium oxide is used as an aqueous treatment, desulfurization efficiency is inferior. Moreover, such unreacted constituents as magnesium oxide of low reactivity and other constituents remain as residue in the circulation system, because the reaction rate of magnesium oxide is slow and besides the constituents of high reactivity are consumed preferentially. With the increase of residue, build-up of scale and clogging are likely to be caused in the pumps and pipes for circulation purpose, which results in the prevention of smooth functioning of a desulfurization device.

Disclosure of Invention

Therefore, taking into account of the foregoing, it is the object of the present invention to provide a desulfurizing method utilizing the ground light burned magnesium oxide as the desulfurizing agent with high coefficient of utilization, while preventing the above described accumulation of residue in the circulation system

- 3 -

of the desulfurizing tower, so that a stable and efficient desulfurization of exhaust gas is attained at low cost.

In order to attain the above objects, the inventor has made a comparison of reactivity to sulfuric oxide in a desulfurization solution between light burned magnesium oxide and magnesium hydroxide conventionally used as a desulferizing agent. As a result, it has been found that even though the reaction rate and consistency of light burned magnesium oxide were comparatively inferior, the efficiency comparable to that of magnesium hydroxide can be obtained, when used in large quantities, because the magnesium oxide of high reactivity increases in the constituents. However, the problem of residue described above becomes serious when used in quantities.

Having made an investigation and researches, the inventor has tried to provide an external treatment system which includes a specific process outside the desulfurizing tower. In the external treatment system, a large quantity of light burned magnesium oxide is hydrated and an aqueous solution of magnesium hydroxide derived from magnesium oxide of high reactivity is supplied to the desulfurizing tower as the aqueous treatment. On the other hand, surplus magnesium oxide of low reactivity is circulated in the form of slurry in the external treatment system together with magnesium carbonate and impurities. At the same time, a portion of the desulfurization solution in the desulfuring tower is introduced into the circulation system so that the surplus magnesium oxide may react with it. The inventor has found that, through these processes, efficient

- 4 -

desulfurization can be effected without causing residue in the circulation system of the desulfurizing tower, and that the constituents of low reactivity contained in the ground light burned magnesium oxide contribute to the desulfurization in the external treatment system and thereby the coefficient of utilization of said grind as the desulfurizing agent is increased, and that the stable and efficient desulfurization of exhaust gas is made possible.

Namely, the present invention provides a desulfurizing method comprising; providing an external treatment system including first and second reaction processes and solid-liquid separation process outside a desulfurizing tower in which continuous gas-liquid contact is performed between exhaust gas containing sulfuric oxides and an aqueous treatment containing desulfurizing agent to adsorb the sulfuric oxides by the aqueous treatment, mixing and reacting, in said first reaction process, a desulfurization solution which is supplied from the desulfurizing tower and which has adsorbed the sulfuric oxide with slurry supplied from the solid-liquid separation process, mixing and reacting, in said second reaction process, a reaction product of said first reaction process with ground light burned magnesium oxide, separating a reaction product of said second reaction process into a liquid containing no solids and the slurry to be supplied to said first reaction process, and supplying said liquid containing no solids to the desulfurizing tower as the aqueous treatment.

In accordance with the present invention, it is preferred that at least a portion of slurry supplied from the solid-liquid separation process to the first reaction process is ground into fine slurry by a grinding means.

In accordance with the present desulfurizing method, it makes possible to use ground light burned magnesium oxide of low cost as the desulfurizing agent and increase greatly the coefficient of utilization thereof. As a result, a remarkable reduction in treatment cost can be attained compared with the conventional desulfurizing method which utilizes magnesium hydroxide. Furthermore, the accumulation of residue can be completely prevented in the desulfurizing tower so that the buil-up of scale and clogging in the circulation system are not caused. Accordingly, stable and efficient desulfurization of exhaust gas can be performed at low cost.

Moreover, when the present desulfurizing method employs the construction wherein at least a portion of slurry supplied from the solid-liquid separation process to the first reaction process is ground into fine slurry by a grinding means, the reactivity of said slurry increases because of the increase of reaction area of the ground particles. Therefore, the coefficient of utilization of the light burned magnesium oxide increases much more and the treatment cost reduces much more.

Brief Description of Drawings

Illustrated is a single schematic representation showing one embodiment of the device which is used for the desulfurizing method in accordance with present invention.

Best Mode for Carrying out the Invention

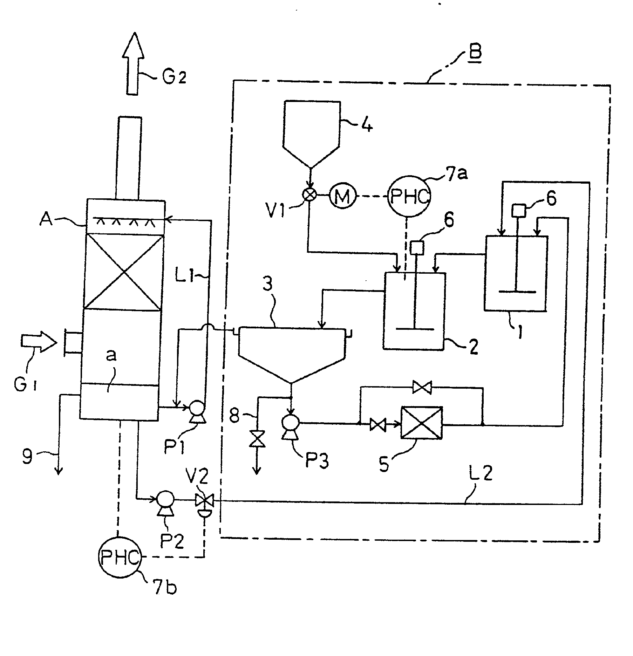

Referring to the drawing, the desulfurizing method in accordance with the present invention is described hereinafter.

In the drawing, reference symbol A is a desulfurizing tower, in which an aqueous treatment consisting of aqueous solution of magnesium hydroxide supplied from an external treatment system B which is provided with outside the tower, is poured from above like a shower and made a gas-liquid contact with exhaust gas $G_1$ containing sulfuric oxides. As a result, sulfuric oxides are absorbed and fixed as magnesium sulfite in the aqueous treatment through desulfurization reaction. At the same time, exhaust gas $G_2$ from which sulfuric oxides have been removed is discharged from the top of the tower.

The aqueous treatment poured into a lower tank a of the desulfurizing tower A, that is, a desulfurization solution which has absorbed sulfuric oxides, generally includes a mixture of $MgSO_3$, $MgSO_4$ and $Mg(HSO_3)_2$. This solution is supplied to the above portion of the tower together with a newly supplied aqueous treatment through a pump P1 and a pipe L1, the repetition of which allows the solution to continuously circulate inside the tower A.

The external treatment system B comprises a first reaction tank 1 for a first reaction process, a second reaction tank 2 for a second reaction process, settling tank 3 for a solid-liquid separation process, material tank 4 storing aqueous slurry of light burned magnesium oxide particles and a wet grinder 5. Both reaction tanks 1,2 are

- 7 -

equipped with a stirrer 6, respectively.

In the first reaction tank 1, the desulfurization solution supplied from the tower A through a pump P2 and a pipe L2 is mixed and reacted with slurry supplied from the settling tank 3 through a pump P3. Reaction products in a slurry form are sent to the second reaction tank 2. In the second reaction tank 2, the aqueous slurry of light burned magnesium oxide particles, which is supplied exceedingly superfluously from the material tank 4, is mixed and reacted with the reaction products supplied from the reaction tank 1. The reaction products obtained here are supplied to the settling tank 3 and separated into supernatant liquid and settling slurry. The supernatant liquid separated here is sent to the tower A, as the aqueous treatment, while the settling slurry is supplied to the first reaction tank 1.

The reaction in both reaction tanks 1 and 2 is, of course, the same as in the desulfuring tower A, that is, a reaction between the magnesium hydroxide formed by the hydration of the solid magnesium oxide and the sulfuric oxides contained in the desulfuriztion solution. Dissolved in the supernatant liquid in the settling tank 3 are excessive magnesium hydroxide which is not consumed in the above reaction and magnesium sulfite as a reaction product. Solid content of the settling slurry comprises unreacted magnesium oxide components which have not been hydrated heretofore, that is, constituents of low reactivity, magnesium carbonate which derives from the particles of light burned magnesium oxide and impurities such as

$Al_2O_3$, $SiO_2$ etc.

At the first reaction process in the first reation tank, the slurry from the settling tank 3 is of low reactivity as explained above, but the desulfurization solution supplied from the desulfurizing tower A is of high reactivity because $Mg(HSO_3)_2$ is much contained therein. Accordingly the low reactivity of the slurry is supplemented with the high reactivity of the solution. As a result, the desulfurization is promoted. In addition, in case the wet grinder 5 is provided at the route of slurry which runs from the settling tank 3 to the first reaction tank 1 as shown in the drawing to grind either a part of all of the supplied slurry into a fine slurry, the surface area for reaction of the solid particles is increased and the above reaction is more promoted.

Magnesium oxide constituents of extremely low reactivity circulates repeatedly along the route of the first reaction tank 1, the second reaction tank 2 and the settling tank 3, and they are gradually consumed for the reaction and decreased.

In the second reaction tank 2, the treated solution contains little $Mg(HSO_3)_2$ because the reaction has been made in the first reaction tank 1. Most of said residual $Mg(HSO_3)_2$ is converted to $MgSO_3$, since magnesium oxide constituents of high reactivity are further supplied exceedingly 'superfluously. The pH of the efficiently neutralized solution is approximately 9. By detecting the pH by a pH controller(PHC) 7a, a supply valve V1 is automatically controlled so as to regulate the supply

- 9 -

amount of the slurry from the material tank 4.

A single reaction tank would not be advisable, since magesium oxide constrituents of high reactivity supplied from the material tank 4 would react preferentially and the constituents of low reactivity returned from the settling tank 3 would not contribute to the reaction and as a result the magnesium oxide constituents of low reactivity accumulate rapidly as unreacted products in the settling tank 3.

Magnesium oxide constituents of extremely low reactivity which do not react even if repeatedly circulated along the route of the reaction tanks 1, 2 and the settling tank 3 and magnesium carbonate as well as other impurities gradually accumulate in the circulation system. However, the increase of solid contents is so slow that no trouble occurs by discharging slurry equivalent to the increase amount from a discharge pipe 8 connected to the settling tank 3.

Although the desulfurizing tower A is supplied the supernatant liquid from the settling tank 3 as the aqueous treatment, the circulation system including the pump P1 and the pipe L1 continues the stable operating without scaling or clogging due to residue since the aqueous treatment contains no solid contents. In order to prevent the build-up of scale, it is desirable to maintain the pH level of the desulfurization solution in the lower tank a at approximately 6. Therefore, the pH is monitored by a pH controller (PHC) 7b, so that an automatic control valve V2 is controlled to regulate the supply amount of the desulfurization solution to be sent to the first reaction tank 1. The amount of the aqueous treatment supplied from the settling tank 3 exceeds the amount of the desulferization solution sent to the first reaction tank 1 by the amount of slurry supplied from the material tank 4. This excess amount is discharged out of the system through a discharge pipe 9.

In the above embodiment, a single tank is used for the first and second reaction processes, respectively. It is, however, acceptable to use two or more reaction tanks for either one or both of said processes, connected at one end or both ends in series or parallel.

As for the solid-liquid separation process, a liquid cyclone or any other solid-liquid separation device can be used in stead of the settling tank 3.

The light burned magnesium oxide used in the present invention is most preferably obtained by calcining magnesium carbonate ore at a low temperature. However, materials obtained through other materials, such as dust collected from a rotary kiln during the precess of manufacturing magnesium oxide clinker, are also usable.

Described hereinafter is one embodiment of the desulfurizing method using the above system.

Exhause gas $G_1$ containing 1200 ppm sulfur dioxide ($SO_2$) discharged from a boiler for heavy oil C was fed into the desulfurizing tower A at a rate of $10^4$ Nm/hour. The desulfurization was made through the continuous gas-liquid contact between the exhaust gas and the aqueous treatment poured from above like a shower.

— 11 —

The desulfurization solution stored in the lower tank a was controlled to a pH of between 5.9 to 6.0 and a temperature of 55°C and delivered to the first reaction tank of 1 m³ volume by the pump P1 at the rate of 4500 Kg/hour. The same desulfurization solution was discharged from the system through the discharge pipe 9 at a rate of 1400 Kg/hour.

In the first reaction tank 1, the desulfurization solution and slurry sent from the settling tank 3 at a rate of 120 Kg/hour were mixed and reacted with the residence time of approximately 10 minutes. The slurry-like reaction products were then continuously sent to the 1 m³ second reaction tank 2. In the second reaction tank 2, the reaction products from the first reaction tank were mixed and reacted with the slurry of light burned magnesium oxide particles (average particle size of 20 μm) having 30 wt% solid content which was continuously supplied from the material tank 4, with the residence time of approximately 10 minutes. The slurry-like reaction products were then continuously sent to the settling tank 3.

The supply amount of the slurry from the material tank 4 to the second reaction tank 2 was controlled so that the pH inside the second reaction tank 2 would be kept at 9.0 during the course of normal operation. In the settling tank 3, the settling slurry was sent to the first reaction tank 1 by the pump P3 via the wet grinder 5 at the afore-mentioned rate, and all supernatant liquid overflown was continuously sent to the desulfurizing tower A.

Thus, the desulfurization of exhaust gas was conducted continuously, and as a result the concentration of sulfur dioxide in the treated exhaust gas $G_2$ discharged from the desulfurizing tower A was 10 ppm. Additionally, the desulfurization solution stored in the lower tank a of the tower A was an aqueous solution containing 1.2 wt% of $MgSO_4$, 1.32 wt% of $MgSO_3$ and 1.48 wt% of $Mg(HSO_3)_2$ on average, which scarecely contains solid content.

## CLAIMS

1. Desulfurizing method of exhaust gas comprising; providing an external treatment system including first and second reaction processes and solid-liquid separation process outside a desulfurizing tower in which continuous gas-liquid contact is performed between exhaust gas containing sulfuric oxides and an aqueous treatment containing desulfurizing agent to adsorb the sulfuric oxides by the aqueous treatment, mixing and reacting, in said first reaction process, a desulfurization solution which is supplied from the desulfurizing tower and which has adsorbed the sulfuric oxide with slurry supplied from the solid-liquid separation process, mixing and reacting, in said second reaction process, a reaction product of said first reaction process with ground light burned magnesium oxide, separating a reaction product of said second reaction process into a liquid containing no solid content and the slurry to be supplied to said first reaction process, and supplying said liquid containing no solid content to the desulfurizing tower as the aqueous treatment.

2. Desulfurizing method of exhaust gas claimed in claim 1, wherein at least a part of the slurry supplied from the solid-liquid separation process to the first reaction process is gound into fine slurry by a grinding means.

# INTERNATIONAL SEARCH REPORT

International Application No PCT/JP90/00013

**I. CLASSIFICATION OF SUBJECT MATTER** (if several classification symbols apply, indicate all) [6]

According to International Patent Classification (IPC) or to both National Classification and IPC

Int. Cl$^5$     B01D53/34

**II. FIELDS SEARCHED**

| Minimum Documentation Searched [7] | |
|---|---|
| Classification System i | Classification Symbols |
| IPC | B01D53/34 |

| Documentation Searched other than Minimum Documentation to the Extent that such Documents are Included in the Fields Searched [8] | |
|---|---|
| Jitsuyo Shinan Koho | 1926 – 1989 |
| Kokai Jitsuyo Shinan Koho | 1971 – 1989 |

**III. DOCUMENTS CONSIDERED TO BE RELEVANT** [9]

| Category* | Citation of Document, [11] with indication, where appropriate, of the relevant passages [12] | Relevant to Claim No. [13] |
|---|---|---|
| A | JP, A, 53-60376 (Idemitsu Kosan Co., Ltd.), 30 May 1978 (30. 05. 78) (Family: none) | 1 - 2 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| March 14, 1990 (14. 03. 90) | March 26, 1990 (26. 03. 90) |
| International Searching Authority | Signature of Authorized Officer |
| Japanese Patent Office | |

Form PCT 'ISA/210 (second sheet) (January 1985)